# EUROPÄISCHE PATENTANMELDUNG

(11) **EP 4 850 867 A1**
(43) Veröffentlichungstag der Anmeldung: **09.12.2026**
(21) Anmeldenummer: 26182647.3
(22) Anmeldetag: 02.06.2026
(51) Int. Cl.: B25J 9/04, B25J 9/10, B25J 15/00, B25J 19/00

(54) **INDUSTRIEROBOTER ZUR HANDHABUNG VON STÜCKGÜTERN, VERFAHREN ZUR HANDHABUNG VON STÜCKGÜTERN UND SYSTEM MIT EINEM INDUSTRIEROBOTER ZUR HANDHABUNG VON STÜCKGÜTERN**

(30) Priorität: 05.06.2025 DE 102025122114
(71) Anmelder: Krones AG, 93073 Neutraubling (DE)
(72) Erfinder: PERL, Kurt, 93073 Neutraubling (DE); KIRSCHNER, Peter, 93073 Neutraubling (DE); MARTL, Andreas, 93073 Neutraubling (DE); REICHERT, Christian, 93073 Neutraubling (DE); HAAS, Guillaume, 77731 Willstätt (DE); STOCKER, Tim, 77731 Willstätt (DE)
(74) Vertreter: Grünecker Patent- und Rechtsanwälte PartG mbB

(57) **Zusammenfassung**

Es wird ein Industrieroboter (1) mit einer seriellen Kinematik vorgeschlagen, welche für Stückgüter mit einer große Traglast ausgebildet ist, mit einem an einer Roboterbasis (2) drehbar aufgenommenen Karussell (3), mit einer an dem Karussell (3) drehbar aufgenommenen Schwinge (6), mit einem an der Schwinge (6) drehbar aufgenommenen Armausleger (10) und mit einem an dem Armausleger (10) beweglich angeordneten Endeffektorträger (30), welcher einen die Stückgüter handhabenden Endeffektor aufnimmt. Darüber hinaus ist eine Schwingen-Halteeinrichtung vorgesehen, welche in ihrem Arretierungszustand die Schwinge (6) in einer Schwingen-Haltestellung relativ zu dem Karussell (3) arretiert, und/oder eine Armausleger-Halteeinrichtung, welche in ihrem Arretierungszustand den Armausleger (10) in einer Armausleger-Haltestellung relativ zu der Schwinge (6) arretiert. Es werden darüber hinaus ein System (100) zur Handhabung von Stückgütern mit einem Industrieroboter (1) und ein Verfahren zur Handhabung von Stückgütern mit einem Industrieroboter (1) vorgeschlagen.

## Beschreibung

Die Erfindung geht aus von einem Industrieroboter mit einer seriellen Kinematik, zur Handhabung von Stückgütern, einem System mit einem derartigen Industrieroboter sowie von einem Verfahren zur Handhabung von Stückgütern mit einem derartigen Industrieroboter.

Derartige Industrieroboter dienen zum Positionieren und Bewegen eines Manipulators oder Endeffektors in mindestens zwei Dimensionen im Raum. Die Kinematik umfasst eine Roboterbasis, welche auch als Grundgestell bezeichnet wird, ein Karussell, eine Schwinge und einen Armausleger, an welchem eine Effektorhalterung zur Aufnahme des Endeffektors aufgenommen ist. Der Endeffektor bildet das letzte Element der kinematischen Kette, welche das Karussell, die Schwinge und den Armausleger umfasst. Der Endeffektor wird auch als Manipulator bezeichnet, der die physikalische Interaktion mit der Umgebung des Industrieroboters ausführt. Als Endeffektor oder Manipulator wird beispielsweise ein Greifer oder ein Werkzeug eingesetzt, welche die Stückgüter insbesondere aufnehmen und umsetzen. Die Bewegung der Effektorhalterung relativ zu der Roboterbasis erfolgt mittels der Kinematik. Hierzu sind mehrere Antriebe vorgesehen: ein erster Antrieb, der das Karussell um eine erste geometrische Antriebsachse relativ zu der Roboterbasis dreht, ein zweiter Antrieb, der die Schwinge um eine zweite geometrische Antriebsachse relativ zu dem Karussell dreht, ein dritter Antrieb, der den Armausleger um eine dritte geometrische Antriebsachse relativ zu der Schwinge dreht. Die drei Achsen, welche für eine Bewegung des Karussells, der Schwinge und des Armauslegers sorgen, werden auch als Hauptachsen bezeichnet. Weitere Antriebe dienen dazu, die an dem Armausleger aufgenommene Effektorhalterung und den an der Effektorhalterung aufgenommenen Endeffektor um weitere geometrische Achsen zu bewegen. Die zugehörigen Achsen werden in Unterscheidung zu den Hauptachsen als Handachsen bezeichnet. Die Positionierung der Effektorhalterung mit einem daran angeordneten Endeffektor im Raum erfolgt mittels des Karussells, der Schwinge und des Armauslegers und den zugehörigen Hauptachsen. Eine Bewegung der Effektorhalterung relativ zu dem Armausleger sowie eine Bewegung des Endeffektors oder Teile des Endeffektors relativ zur Effektorhalterung erfolgt mittels mindestens einer Handachse. Hierzu zählt beispielsweise eine Drehung der Effektorhalterung oder das Öffnen und Schließen eines als Greifer ausgebildeten Endeffektors. Da die Hauptachsen eine erste Achse, eine zweite Achse und eine dritte Achse umfassen, werden die Handachsen auch als vierte, fünfte und sechste Achse bezeichnet.

Industrieroboter mit serieller Kinematik werden auch als Knickarmroboter bezeichnet.

Industrieroboter, welche für eine hohe Traglast ausgelegt sind, werden beispielsweise zur Handhabung von Stückgütern mit großem Eigengewicht eingesetzt. Hierzu zählen zum Beispiel Verpackungs- oder Palettieranlagen zum Stapeln und Palettieren von Objekten wie Paketen oder Gebinden mit mehreren Artikeln. Je nach Anwendung kann die Traglast beispielsweise mehr als 100kg, mehr als 200kg oder sogar mehr als 800kg betragen. Kinematiken, die für eine entsprechend hohe Traglast ausgelegt sind, müssen eine hohe Stabilität aufweisen, was wiederum ein gewisses Eigengewicht zur Folge hat. Wenn der Industrieroboter gewartet, repariert oder transportiert wird, muss dafür Sorge getragen werden, dass insbesondere die Schwinge und/ oder der Armausleger in einer bestimmten Position festgelegt werden, um eine Verletzung von Personen zu vermeiden und eine Beschädigung des Industrieroboters auszuschließen.

Der Erfindung liegt die Aufgabe zugrunde, einen Industrieroboter, ein System und ein Verfahren zur Handhabung von Stückgütern mit großen Traglasten zur Verfügung zu stellen, welche es ermöglichen, dass der Industrieroboter ohne externe Vorrichtungen in einer vorgegebenen Position oder Ausrichtung gehalten wird, so dass der Industrieroboter gewartet, repariert oder transportiert werden kann, ohne dass eine Gefahr einer Beschädigung der Kinematik oder einer Verletzung von Personen besteht.

Diese Aufgabe wird durch den Industrieroboter mit den Merkmalen des Anspruchs 1 gelöst. Der Industrieroboter zeichnet sich dadurch aus, dass er mit einer Schwingen-Halteeinrichtung und/ oder mit einer Armausleger-Halteeinrichtung ausgestattet ist. Die zweite geometrische Antriebsachse, um die die Schwinge drehbar ist, und die dritte geometrische Antriebsachse, um die der Armausleger drehbar ist, sind in der Regel horizontal ausgerichtet oder verlaufen unter einer Neigung zur Horizontalen. Wenn der der Schwinge zugeordnete zweite Motor kein Drehmoment auf die Schwinge ausübt, wird die auf die Schwinge wirkende Schwerkraft durch die Schwingen-Halteeinrichtung ausgeglichen und die Schwinge in einer vorgegebenen Schwingen-Haltestellung arretiert. Dabei ist die Schwingen-Halteeinrichtung derart an dem Industrieroboter angeordnet, dass in einem Arretierungszustand der Schwingen-Halteeinrichtung die Schwinge auch dann in der Schwingen-Haltestellung verbleibt, wenn der zweite Motor von der Kinematik entfernt wird. Entsprechendes gilt für die Armausleger-Halteeinrichtung: Wenn der dem Armausleger zugeordnete dritte Motor kein Drehmoment auf den Armausleger ausübt, wird die auf den Armausleger wirkende Schwerkraft durch die Armausleger-Halteeinrichtung ausgeglichen und der Armausleger in einer vorgegebenen Armausleger-Haltestellung arretiert. Dabei ist die Armausleger-Halteeinrichtung derart an dem Industrieroboter angeordnet, dass in einem Arretierungszustand der Armausleger-Halteeinrichtung der Armausleger auch dann in der Armausleger-Haltestellung verbleibt, wenn der dritte Motor von der Kinematik entfernt wird. Die Schwingen-Halteeinrichtung und/ oder die Armausleger-Halteeinrichtung ermöglichen es somit, dass der zweite Motor und/ oder der dritte Motor aus dem Industrieroboter ausgebaut werden können, ohne dass hierzu die Schwinge und/ oder der Armausleger durch externe Vorrichtungen, wie beispielsweise ein Kran gestützt oder gehalten werden müssen. Die Motoren können damit zur Reparatur von der Kinematik entfernt werden oder bei einem Defekt durch einen anderen Motor ersetzt werden. Darüber hinaus können die Motoren zum Transport des Industrieroboters abgenommen werden, wodurch das Gewicht der Kinematik reduziert wird. Die Schwingen-Halteeinrichtung und die Armausleger-Halteeinrichtung verhindern in ihrem Arretierungszustand eine unerwünschte Drehbewegung der Schwinge und des Armauslegers unter Einwirkung ihrer Gewichtskraft, so dass eine Beschädigung des Industrieroboters vermieden wird und keine Gefahr der Verletzung von Personen besteht.

Grundsätzlich ist es zusätzlich möglich, das Karussell mit einer entsprechenden Karussell-Halteeinrichtung auszustatten. Da jedoch die erste geometrische Antriebsachse, um die das Karussell relativ zur Roboterbasis zur Rotation angetrieben ist, in der Regel vertikal verläuft, besteht bei dem Karussell nicht zwingend die Gefahr, dass sich dieses unter Einwirkung der Gewichtskraft der Kinematik um die erste geometrische Antriebsachse in unerwünschter Weise dreht, wenn der erste Antrieb kein Drehmoment erzeugt. Sollte jedoch die erste geometrische Antriebsachse eine von der Vertikalen abweichende Ausrichtung aufweisen, kann der Industrieroboter für das Karussell mit einer Karussell-Halteeinrichtung ausgestattet sein, die der Schwingen-Halteeinrichtung oder der Armausleger-Halteeinrichtung entspricht. Umfasst der erste Antrieb einen ersten Motor und ein erstes Getriebe, so kann die Karussell-Halteeinrichtung beispielsweise in das erste Getriebe integriert sein oder an dem ersten Getriebe angeordnet sein.

Vorteilhafterweise ist der Industrieroboter steuerungsunabhängig ausgeführt. Er umfasst die mechanischen Komponenten und die zugehörigen Antriebe und kann an seinem Einsatzort in ein beliebiges Steuerungskonzept eingebunden werden. Dies führt dazu, dass er mit beliebigen Automatisierungskonzepten kompatibel ist. Auf eine Integration einer proprietären Robotersteuerung des Industrieroboters in eine aus unterschiedlichen Komponenten bestehende Umgebung mit einer bereits vorhandenen Steuerung kann verzichtet werden, was die Integration erheblich vereinfacht.

Nach einer vorteilhaften Ausgestaltung der Erfindung umfasst der zweite Antrieb, welcher der Schwinge zugeordnet ist, ein zweites Getriebe, von dem der zweite Motor lösbar ist, während das zweite Getriebe an der Kinematik verbleibt. Dabei ist die Schwingen-Halteeinrichtung in das Getriebe integriert oder an dem Getriebe angeordnet.

Nach einer weiteren vorteilhaften Ausgestaltung der Erfindung ist die Schwingen-Halteeinrichtung zwischen dem zweiten Antrieb und der Schwinge an der Kinematik angeordnet.

Nach einer weiteren vorteilhaften Ausgestaltung der Erfindung umfasst der dritte Antrieb, welcher dem Armausleger zugeordnet ist, ein drittes Getriebe, von dem der dritte Motor lösbar ist, während das dritte Getriebe an der Kinematik verbleibt. Dabei ist die Armausleger-Halteeinrichtung in das Getriebe integriert oder an dem Getriebe angeordnet.

Nach einer weiteren vorteilhaften Ausgestaltung der Erfindung ist die Armausleger-Halteeinrichtung zwischen dem dritten Antrieb und dem Armausleger an der Kinematik angeordnet.

Nach einer weiteren vorteilhaften Ausgestaltung der Erfindung umfasst die Schwingen-Halteeinrichtung ein Schwingen-Blockierelement, welches mit einer Schwingen-Antriebswelle drehfest verbunden ist. Dabei ist die Schwingen-Antriebswelle Teil eines Schwingenantriebsstrangs, welcher das Drehmoment des zweiten Antriebs auf die Schwinge überträgt. Die Schwingen-Antriebswelle kann beispielsweise die Abgangswelle des zweiten Getriebes sein. Das Schwingen-Blockierelement kann in dieses zweite Getriebe integriert sein. Das Schwingen-Blockierelement weist Ausnehmungen auf. Die Kinematik ist mit zweiten Aufnahmen ausgestattet, die an dem Karussell starr festgelegt sind. Schwingen-Blockiermittel, welche in die Ausnehmungen des Schwingen-Blockierelements eingeführt sind, greifen in die zweiten Aufnahmen ein. Dabei sind die Schwingen-Blockiermittel, welche durch die Ausnehmungen des Schwingen-Blockierelements hindurch in die zweiten Aufnahmen des Karussells eingesetzt sind, derart festgelegt, dass sie sich nicht von allein und ohne äußere Einwirkungen lösen können. Sie fixieren dabei das mit der Schwingen-Antriebswelle verbundene Schwingen-Blockierelement relativ zu der Roboterbasis. Dadurch wird die Schwinge in einer vorgegebenen Schwingen-Haltestellung festgelegt.

Nach einer weiteren vorteilhaften Ausgestaltung der Erfindung umfasst die Armausleger-Halteeinrichtung ein Armausleger-Blockierelement, welches mit einer Armausleger-Antriebswelle drehfest verbunden ist. Dabei ist die Armausleger-Antriebswelle Teil eines Armauslegerantriebsstrangs, welcher das Drehmoment des dritten Antriebs auf den Armausleger überträgt. Die Armausleger-Antriebswelle kann beispielsweise die Abgangswelle des dritten Getriebes sein. Das Armausleger-Blockierelement kann in dieses dritte Getriebe integriert sein. Das Armausleger-Blockierelement weist Ausnehmungen auf. Ferner ist die Kinematik mit dritten Aufnahmen ausgestattet, die an dem Karussell oder an der Schwinge starr festgelegt sind. Armausleger-Blockiermittel, welche in die Ausnehmungen des Armausleger-Blockierelements eingeführt sind, greifen in die dritten Aufnahmen ein. Dabei sind die Armausleger-Blockiermittel, welche durch die Ausnehmungen des Armausleger-Blockierelements hindurch in die dritten Aufnahmen an dem Karussell oder der Schwinge eingesetzt sind, derart festgelegt, dass sie sich nicht von allein und ohne äußere Einwirkung lösen können. Sie fixieren dabei das mit der Armausleger-Antriebswelle verbundene Armausleger-Blockierelement relativ zu der Roboterbasis. Dadurch wird der Armausleger in einer vorgegebenen Armausleger-Haltestellung festgelegt.

Nach einer weiteren vorteilhaften Ausgestaltung der Erfindung sind die Ausnehmungen in dem Schwingen-Blockierelement und/ oder in dem Armausleger-Blockierelement als Durchgangsöffnungen ausgebildet. Ihr Öffnungsquerschnitt kann an den Querschnitt der Schwingen-Blockiermittel und der Armausleger-Blockiermittel angepasst sein.

Nach einer weiteren vorteilhaften Ausgestaltung der Erfindung sind die Ausnehmungen in dem Schwingen-Blockierelement und/ oder in dem Armausleger-Blockierelement als Sackloch ausgebildet. Ihr Öffnungsquerschnitt kann an den Querschnitt der Schwingen-Blockiermittel und der Armausleger-Blockiermittel angepasst sein.

Nach einer weiteren vorteilhaften Ausgestaltung der Erfindung sind das Schwingen-Blockiermittel und/ oder Armausleger-Blockiermittel als Schraube, Stift oder Bolzen ausgebildet. Handelt es sich um eine Schraube, ist die zweite Aufnahme, welche das Schwingen-Blockiermittel aufnimmt, als Gewindebohrung ausgebildet, wobei das als Schraube ausgebildete Schwingen-Blockiermittel mit der als Gewindebohrung ausgebildeten zweiten Aufnahme in Eingriff steht. Entsprechend steht das als Schraube ausgebildete Armausleger-Blockiermittel mit der als Gewindebohrung ausgebildeten dritten Aufnahme in Eingriff. Durch das Anziehen der entsprechenden Schrauben in den Gewindebohrungen werden die Schwinge und/ oder der Armausleger festgelegt.

Nach einer weiteren vorteilhaften Ausgestaltung der Erfindung ist die/ der in das Schwingen-Blockierelement und in die zweite Aufnahme eingesetzte Schraube oder Stift oder Bolzen mit ihrer/ seiner geometrischen Längsachse parallel oder senkrecht zu einer geometrischen Rotationsachse des Schwingen-Blockierelements ausgerichtet.

Nach einer weiteren vorteilhaften Ausgestaltung der Erfindung ist die/ der in das Armausleger-Blockierelement und in die dritte Aufnahme eingesetzte Schraube oder Stift oder Bolzen mit ihrer/ seiner geometrischen Längsachse parallel oder senkrecht zu einer geometrischen Rotationsachse des Armausleger-Blockierelements ausgerichtet.

Nach einer weiteren vorteilhaften Ausgestaltung der Erfindung ist das Schwingen-Blockierelement und/ oder das Armausleger-Blockierelement als Scheibe ausgebildet.

Nach einer weiteren vorteilhaften Ausgestaltung der Erfindung ist das Schwingen-Blockierelement und/ oder das Armausleger-Blockierelement als Zylinder ausgebildet.

Nach einer weiteren vorteilhaften Ausgestaltung der Erfindung ist das Schwingen-Blockierelement und/ oder das Armausleger-Blockierelement als Nabe ausgebildet.

Nach einer weiteren vorteilhaften Ausgestaltung der Erfindung ist das Schwingen-Blockiermittel unter Vorspannung derart an der Kinematik aufgenommen, dass es von einem an dem zweiten Motor angeordneten Halteteil in einer vorgespannten Betriebsstellung gehalten ist, in der es sich außerhalb der Ausnehmung des Schwingen-Blockierelements befindet, solange der zweite Motor an der Kinematik befestigt ist. Darüber hinaus ist das Schwingen-Blockiermittel derart unter Vorspannung an der Kinematik aufgenommen, dass es beim Lösen des zweiten Motors von der Kinematik durch das Halteteil freigegeben wird und durch eine Feder oder ähnliches in einen Arretierungszustand gedrückt wird, in dem es sich in einer Blockierstellung in dem Schwingen-Blockierelement befindet.

Nach einer weiteren vorteilhaften Ausgestaltung der Erfindung ist das Armausleger-Blockiermittel unter Vorspannung derart an der Kinematik aufgenommen, dass es von einem an dem dritten Motor angeordneten Halteteil in einer vorgespannten Betriebsstellung gehalten ist, in der es sich außerhalb der Ausnehmung des Armausleger-Blockierelements befindet, solange der dritte Motor an der Kinematik befestigt ist. Darüber hinaus ist das Armausleger-Blockiermittel derart unter Vorspannung an der Kinematik aufgenommen, dass es beim Lösen des dritten Motors von der Kinematik durch das Halteteil freigegeben wird und durch eine Feder oder ähnliches in einen Arreiterungszustand gedrückt wird, in dem es sich in einer Blockierstellung in dem Armausleger-Blockierelement befindet.

Nach einer weiteren vorteilhaften Ausgestaltung der Erfindung ist die Schwingen-Halteeinrichtung als elektromagnetische Federdruck-Feststellbremse ausgebildet.

Nach einer weiteren vorteilhaften Ausgestaltung der Erfindung ist die Schwingen-Halteeinrichtung derart an der Kinematik befestigt, dass sie ausschließlich mit Spezialwerkzeugen von der Kinematik lösbar ist.

Nach einer weiteren vorteilhaften Ausgestaltung der Erfindung ist die Armausleger-Halteeinrichtung derart an der Kinematik befestigt, dass sie ausschließlich mit Spezialwerkzeugen von der Kinematik lösbar ist.

Nach einer weiteren vorteilhaften Ausgestaltung der Erfindung ist der Industrieroboter mit einer Karussell-Halteeinrichtung ausgestattet, welche in ihrem Arretierungszustand das Karussell in einer Karussell-Haltestellung relativ zu der Roboterbasis arretiert, wobei die Karussell-Halteeinrichtung derart ausgebildet und an der Kinematik angeordnet ist, dass das Karussell bei einem Lösen des ersten Motors von der Kinematik in der Karussell-Haltestellung verbleibt.

Die Erfindung bezieht sich zusätzlich auf ein System zur Handhabung von Stückgütern, insbesondere Behältern, wobei das System mindestens einen Industrieroboter umfasst, wie er bereits beschrieben wurde. Das System kann weiterhin eine oder mehrere der folgenden Behälterbehandlungsmaschinen umfassen: eine Abfüllmaschine, eine Etikettiermaschine, einen Packer und/oder einen Schrumpftunnel. Weiterhin kann das System Transporteinrichtungen zum Transport der Stückgüter umfassen, welche Behälter bzw. zu Gebinden zusammengefasste Behälter transportiert. Bei den Behältern handelt es sich vorzugsweise um Dosen oder Flaschen. Bei den Gebinden kann es sich um Schrumpfgebinde, Klebegebinde (bei denen mindestens zwei Behälter unmittelbar und insbesondere ausschließlich, durch Klebepunkte miteinander verbunden sind), Trays, Kartons, Clip-Gebinde oder Kästen handeln.

Das System kann zwei oder mehr der beschriebenen Industrieroboter umfassen.

Insbesondere kann ein Industrieroboter zum Entpalettieren der Stückgüter verwendet werden.

Insbesondere kann ein Industrieroboter zum Palettieren der Stückgüter verwendet werden.

Bei dem System kann es sich um eine Behälterabfüllanlage mit den bereits beschriebenen Maschinen, insbesondere der Abfüllmaschine, handeln. Alternativ oder zusätzlich kann es sich bei dem System um eine Kommissionieranlage handeln, insbesondere bei der Behälter oder Gebinde von sortenreinen Paletten zu Mischpaletten mit unterschiedlichen Sorten an Behältern oder Gebinden verarbeitet werden.

Die oben genannte Aufgabe wird darüber hinaus durch ein Verfahren mit den Merkmalen des Anspruchs 14 gelöst. Das Verfahren sieht vor, dass die Handhabung von Stückgütern mit einem Industrieroboter durchgeführt wird, der mit einer für große Traglasten ausgebildeten, seriellen Kinematik ausgestattet ist. Die Kinematik umfasst ein Karussell, welches an einer Roboterbasis drehbar aufgenommen ist, einen ersten Antrieb, der das Karussell um eine erste geometrische Antriebsachse relativ zu der Roboterbasis dreht, eine an dem Karussell drehbar aufgenommene Schwinge, einen zweiten Antrieb, der die Schwinge um eine zweite geometrische Antriebsachse relativ zu dem Karussell dreht, einen Armausleger, der an der Schwinge drehbar aufgenommen ist, einen dritten Antrieb, der den Armausleger um eine dritte geometrische Antriebsachse relativ zu der Schwinge dreht und einen an dem Armausleger zumindest mittelbar angeordneten Endeffektorträger, welcher einen die Stückgüter handhabenden Endeffektor aufnimmt. Darüber hinaus ist die Kinematik mit einer Schwingen-Halteeinrichtung ausgestattet, welche in ihrem Arretierungszustand die Schwinge in einer vorgegebenen Schwingen-Haltestellung relativ zu dem Karussell arretiert, wobei die Schwingen-Halteeinrichtung derart ausgebildet und an der Kinematik angeordnet ist, dass die Schwinge bei einem Lösen des zweiten Motors von der Kinematik in der Schwingen-Haltestellung verbleibt. Ferner ist die Kinematik mit einer mit einer Armausleger-Halteeinrichtung ausgestattet, welche in ihrem Arretierungszustand den Armausleger in einer vorgegebenen Armausleger-Haltestellung relativ zu der Schwinge arretiert, wobei die Armausleger-Halteeinrichtung derart an der Kinematik angeordnet ist, dass der Armausleger bei einem Lösen des dritten Motors von der Kinematik in der Armausleger-Haltestellung verbleibt. Das Verfahren sieht vor, dass vor einer Wartung, in einem Schadensfall oder vor einem Transport des Industrieroboters die Schwinge mit der Schwingen-Halteeinrichtung in einer vorgegebenen Schwingen-Haltestellung relativ zu dem Karussell arretiert wird und der Armausleger mit der Armausleger-Halteeinrichtung in einer vorgegebenen Armausleger-Haltestellung relativ zu der Schwinge arretiert wird. Dadurch kann die Wartung, die Reparatur oder der Transport des Industrieroboters durchgeführt werden, ohne dass externe Vorrichtungen zur Fixierung der Kinematik benötigt werden und ohne dass eine Gefahr der Beschädigung des Industrieroboters oder einer Verletzung von Personen besteht.

Nach einer weiteren vorteilhaften Ausgestaltung der Erfindung wird die Schwingen-Halteeinrichtung in ihrem Arretierungszustand die Schwinge in verschiedenen Schwingen-Haltestellungen relativ zu dem Karussell arretiert. Die Schwingen-Halteeinrichtung gibt damit nicht eine einzige Schwingen-Haltestellung vor, sondern ermöglicht mehrere Schwingen-Haltestellungen. Dies ist insbesondere dann von Bedeutung, wenn der zweite Motor aufgrund eines Defektes die Schwinge nicht in eine vorgegebene Schwingen-Haltestellung bewegen kann. Aufgrund verschiedener Haltestellungen, die entweder stufenlos einstellbar sind oder an mehreren diskreten Punkten vorgegeben sind, kann die Schwinge in der Position arretiert werden, an der sie sich unmittelbar vor Eintreten des Motordefekts befand, bevor der zweite Motor zur Reparatur ausgebaut wird.

Nach einer vorteilhaften Ausgestaltung des erfindungsgemäßen Verfahrens wird der Armausleger durch die Armausleger-Halteeinrichtung in ihrem Arretierungszustand in verschiedenen Armausleger-Haltestellungen relativ zu der Schwinge arretiert. Die Armausleger-Halteeinrichtung gibt damit nicht eine einzige Armausleger-Haltestellung vor, sondern ermöglicht mehrere Armausleger-Haltestellungen. Dies ist insbesondere dann von Bedeutung, wenn der dritte Motor aufgrund eines Defektes den Armausleger nicht in eine vorgegebene Armausleger-Haltestellung bewegen kann. Aufgrund verschiedener Haltestellungen, die entweder stufenlos einstellbar sind oder an mehreren diskreten Punkten vorgegeben sind, kann der Armausleger in der Position arretiert werden, an der er sich unmittelbar vor Eintreten des Motordefekts befand, bevor der dritte Motor zur Reparatur ausgebaut wird.

Nach einer vorteilhaften Ausgestaltung des erfindungsgemäßen Verfahrens werden die Schwinge-Halteeinrichtung und die Armausleger-Halteeinrichtung gleichzeitig aktiviert und gehen dabei beide in ihren Arretierungszustand über. Dies ist von Vorteil, wenn eine Wartung, eine Reparatur, ein Schadensfall oder ein Transport des Industrieroboters es erfordert, dass die Schwinge und der Armausleger arretiert werden.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung sind Ausführungsbeispiele des Erfindungsgegenstandes dargestellt. Es zeigen:
- Figur 1: Industrieroboter in Seitenansicht,
- Figur 2: Industrieroboter gemäß Figur 1 in einer perspektivischen Ansicht von hinten,
- Figur 3: Industrieroboter gemäß Figur 1 in perspektivischer Ansicht von der Seite,
- Figur 4: zweites Getriebe mit einem ersten Ausführungsbeispiel einer Schwingen-Halteeinrichtung in perspektivischer Ansicht,
- Figur 5: zweites Getriebe gemäß Figur 4 ohne Getriebe-Gehäuseteil,
- Figur 6: zweites Getriebe gemäß Figur 4 in einer Seitenansicht,
- Figur 7: zweites Getriebe gemäß Figur 4 in Schnittdarstellung, Schnitt entlang A-A in Figur 6,
- Figur 8: Ausschnitt Z aus Figur 7,
- Figur 9: zweites Ausführungsbeispiel einer Schwingen-Halteeinrichtung mit zurückgezogenem Schwingen-Blockiermittel,
- Figur 10: Schwingen-Halteeinrichtung gemäß Figur 9 vor dem Entfernen des zweiten Motors,
- Figur 11: Schwingen-Halteeinrichtung gemäß Figur 9 beim Entfernen des zweiten Motors,
- Figur 12: Schwingen-Halteeinrichtung gemäß Figur 9 in Arretierungszustand,
- Figur 13: schematische Darstellung der Stützstruktur des Industrieroboters gemäß Figuren 1 bis 3,
- Figur 14: zweites Ausführungsbeispiel einer Stützstruktur in schematischer Darstellung,
- Figur 15: drittes Ausführungsbeispiel einer Stützstruktur in schematischer Darstellung,
- Figur 16: System mit Industrierobotern gemäß Figuren 1 bis 3.

### Beschreibung der Ausführungsbeispiele

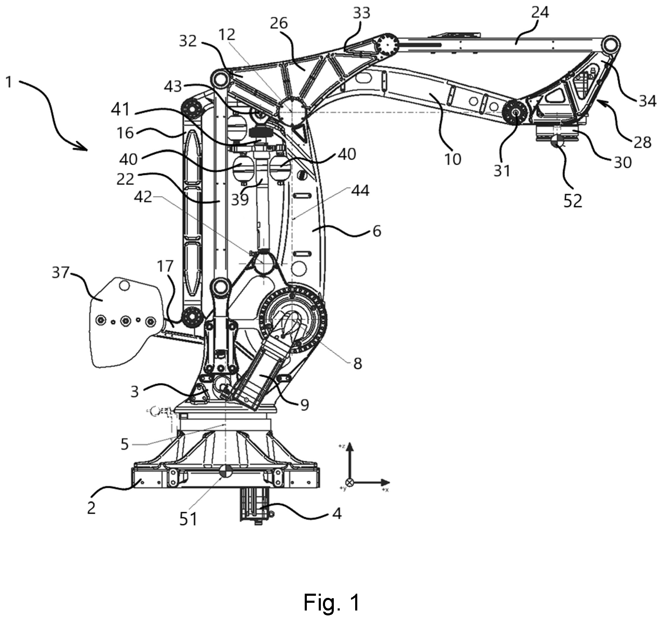

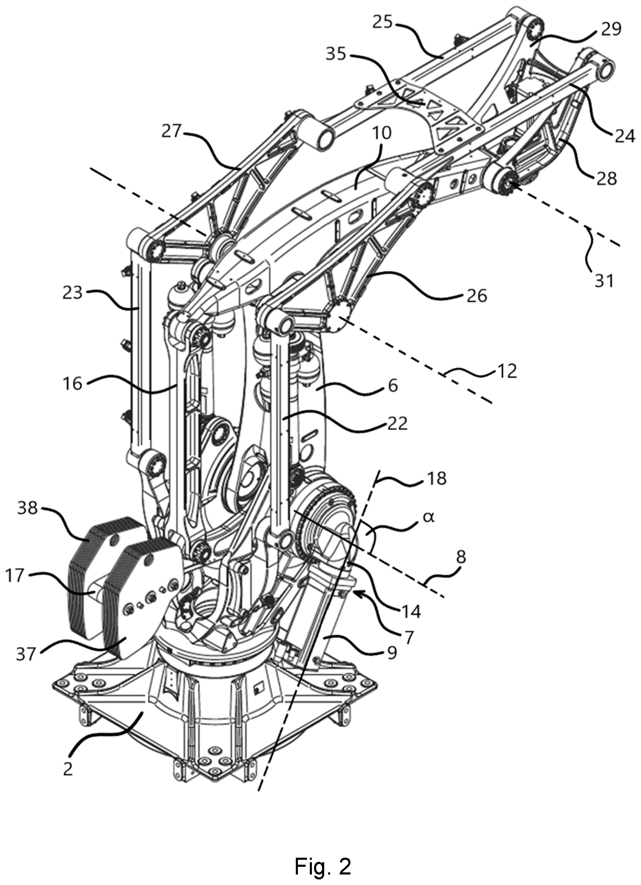

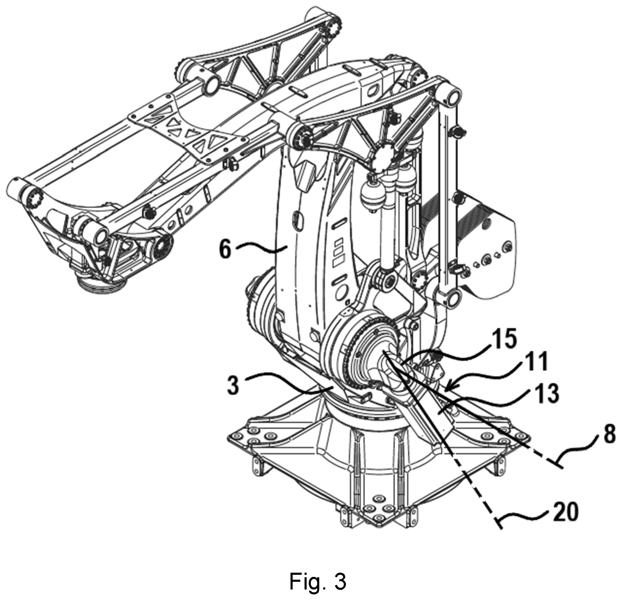

Die Figuren 1 bis 3 zeigen einen Industrieroboter 1 mit serieller Kinematik. Dieser weist eine Roboterbasis 2, ein an einer Roboterbasis drehbar aufgenommenes Karussell 3, eine an dem Karussell 3 drehbar aufgenommene Schwinge 6 und einen an der Schwinge drehbar aufgenommenen Armausleger 10 auf. Die Schwinge 6 und der Armausleger 10 haben dabei einen gekrümmten Verlauf. Ein erster Antrieb 4 übt auf das Karussell 3 relativ zu der Roboterbasis 2 ein Drehmoment um eine erste geometrische Antriebsachse 5 aus. Ein zweiter Antrieb 7 übt auf die Schwinge 6 relativ zu dem Karussell 3 ein Drehmoment um eine zweite geometrische Antriebsachse 8 aus. Der zweite Antrieb 7 umfasst einen zweiten Motor 9 und ein zweites Getriebe 14. Ein dritter Antrieb 11 übt auf den Armausleger 10 relativ zu der Schwinge 6 ein Drehmoment um eine dritte geometrische Antriebsachse 12 aus. Der dritte Antrieb 11 umfasst einen dritten Motor 13 und ein drittes Getriebe 15. Der zweite Antrieb 7 und der dritte Antrieb 11 sind an dem Karussell 3 angeordnet. Während das Drehmoment des zweiten Antriebs 7 über das als Winkelgetriebe ausgebildete zweite Getriebe 14 direkt auf ein unteres Ende der Schwinge 6 übertragen wird, ist zur Übertragung des Drehmoments des dritten Antriebs 11 auf den Armausleger 10 eine Treibstange 16 vorgesehen, die über einen Hebel 17 mit dem ebenfalls als Winkelgetriebe ausgebildeten dritten Getriebe 15 verbunden ist. Ein oberes Ende der Treibstange 16 ist beweglich mit dem Armausleger 10 verbunden. Der Industrieroboter 1 ist derart aufgestellt, dass die erste geometrische Antriebsachse 5 vertikal verläuft. Die zweite geometrische Antriebsachse 8 und die dritte geometrische Antriebsachse 12 sind parallel zueinander. Sie verlaufen horizontal. Die Schwinge 6 ist derart an dem Karussell 3 aufgenommen, dass sich die erste geometrische Antriebsachse 5 und die zweite geometrische Antriebsachse 8 nicht schneiden. Unter Vernachlässigung des daraus resultierenden Abstands verlaufen die erste geometrischen Antriebsachse 5 und die zweite geometrische Antriebsachse 8 senkrecht zueinander.

Der kinematische Ursprung 51 des Industrieroboters 1 befindet sich an der Roboterbasis 2. An dem Armausleger 10 ist mittelbar ein Endeffektorträger 30 angeordnet. An diesem befindet sich der Tool Center Point 52.

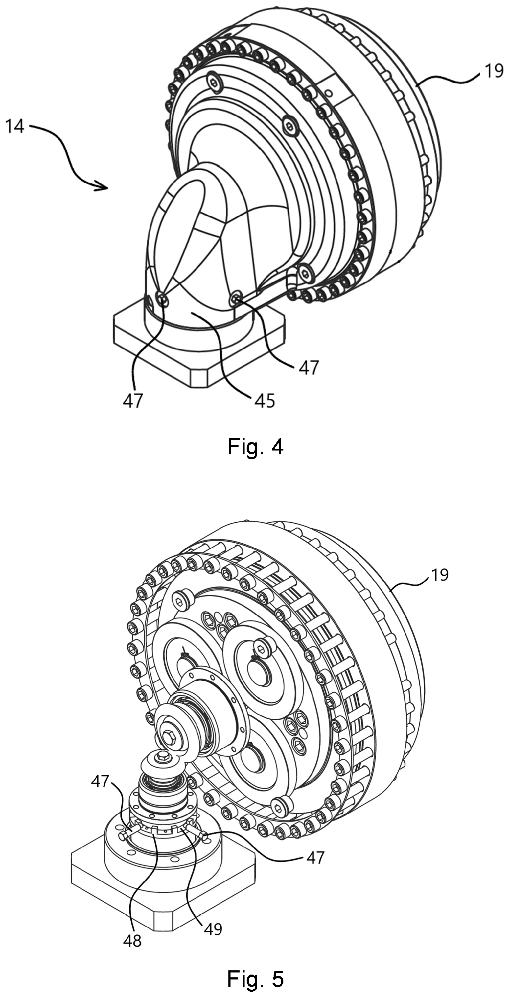

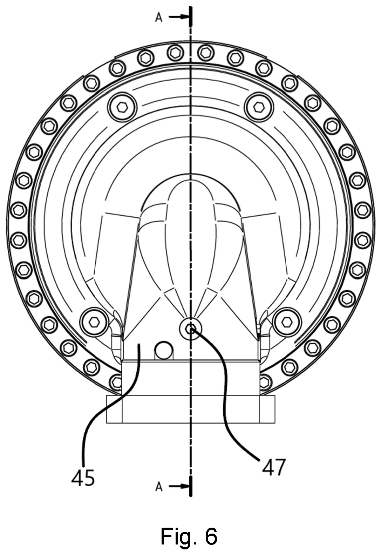

Die Figuren 4 bis 8 zeigen das zweite Getriebe 14. Der in den Figuren 4 bis 8 zur Vereinfachung nicht dargestellte zweite Motor 9 erzeugt ein Drehmoment um eine geometrische Motorwellenachse 18. Das als Winkelgetriebe ausgebildete zweite Getriebe 14 sorgt für eine Umlenkung dieses Drehmoments um einen Winkel α = 90°. Die geometrische Achse, um die die Abgangswelle des zweiten Getriebes 14 rotiert, stimmt mit der zweiten geometrischen Antriebsachse 8 überein. Die Abgangswelle des zweiten Getriebes entspricht der Schwingen-Antriebswelle 19 eines Schwingenantriebsstrangs. Mit der Schwingen-Antriebswelle 19 wird die Schwinge verbunden, welche in den Figuren 4 bis 8 nicht dargestellt ist.

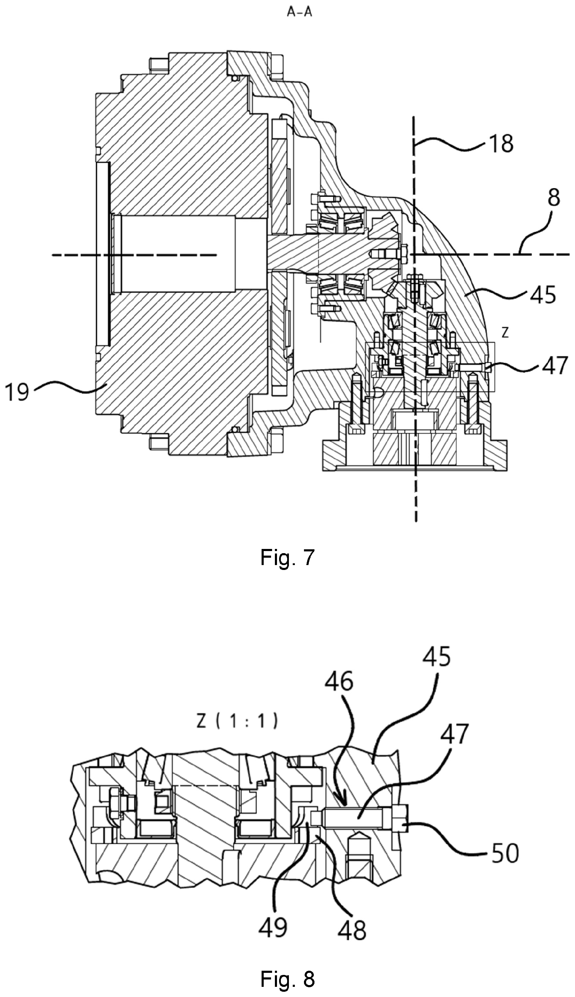

Das in den Figuren 4 bis 8 dargestellte zweite Getriebe 14 ist mit einer Schwingen-Halteeinrichtung ausgestattet. Diese umfasst das Getriebe-Gehäuseteil 45, welches mit zweiten Aufnahmen 46 ausgestattet und starr mit dem Karussell 3 verbunden ist, Schwingen-Blockiermittel 47, welche als Schrauben ausgebildet sind, und ein Schwingen-Blockierelement 48, welches Ausnehmungen 49 für die Schrauben aufweist und Teil eines Schwingen-Antriebsstrangs ist. Das Schwingen-Blockierelement 47 ist in dem Getriebe-Gehäuseteil 45 um die geometrische Motorwellenachse 18 drehbar aufgenommen. Es ist Teil des als Winkelgetriebe ausgebildeten zweiten Getriebes 14. Das Schwingen-Blockierelement 48 weist eine zylindrische Form auf. Die zweiten Aufnahmen 46 in dem Getriebe-Gehäuseteil 45 sind mit einem Innengewinde ausgestattet. Die Figuren 4 bis 8 zeigen mehrere Schwingen-Blockiermittel 47 in Form von Schrauben, die in die Aufnahmen 46 eingesetzt sind. Dabei steht ein Gewinde der Schrauben in Eingriff mit dem Innengewinde der jeweils zugehörigen Aufnahme 46. Figur 8 zeigt, dass die Schraube mit ihrem dem Schraubenkopf 50 abgewandten Ende in eine Ausnehmung 49 des Schwingen-Blockierelements 48 eingreift und dadurch das Schwingen-Blockierelement 48, welches Teil des Schwingen-Antriebsstrangs ist, mit dem Getriebe-Gehäuseteil 45, welches an dem Karussell befestigt ist, fest verbindet, so dass das Schwingen-Blockierelement 48 und damit auch die Schwingen-Antriebswelle 19 mit der daran angeordneten Schwinge relativ zu dem Karussell festgelegt und arretiert sind. Figur 5 zeigt, dass das Schwingen-Blockierelement 48 mehrere Ausnehmungen 49 für die Schwingen-Blockiermittel 47 aufweist. Figur 4 zeigt, dass das Getriebe-Gehäuseteil 45 mehrere Aufnahmen 46 aufweist. Dadurch können mehrere Schwingen-Blockiermittel 47 in Form von Schrauben zur Arretierung der Schwinge eingesetzt werden. Darüber hinaus kann die Schwinge in mehreren verschiedenen Schwingen-Haltestellungen arretiert werden. Die Schwingen-Halteeinrichtung befindet sich in den Figuren 4 bis 8 in ihrem Arretierungszustand. In diesem Arretierungszustand kann der zweite Motor von dem zweiten Getriebe 14 abgenommen werden, wobei die Schwinge durch die Schwingen-Halteeinrichtung in ihrer Ausrichtung gehalten wird.

Der dritte Motor 13 und das dritte Getriebe 15 sind ebenfalls seitlich an dem Karussell 3 angeordnet, wobei das dritte Getriebe 15 ein Drehmoment des dritten Motors 13 um einen Winkel α = 90° umlenkt. Eine geometrische Motorwellenachse 20 des dritten Motors schließt mit einer geometrischen Achse, um welche die Abgangswelle 21 des dritten Getriebes 15 drehbar ist, den Winkel α ein. Die geometrische Achse, um die die Abgangswelle 21 des dritten Getriebes 15 drehbar ist, fällt mit der zweiten geometrischen Antriebsachse 8 zusammen. Das dritte Getriebe 15 ist entsprechend zu dem zweiten Getriebe 14 ausgebildet und weist eine Armausleger-Halteeinrichtung auf, die mit der Schwingen-Halteeinrichtung gemäß den Figuren 4 bis 8 übereinstimmt.

Das als Winkelgetriebe ausgebildete zweite Getriebe 14 und das als Winkelgetriebe ausgebildete dritte Getriebe 15 sorgen dafür, dass die geometrischen Motorwellenachsen 18, 20 nicht entlang der zweiten geometrischen Antriebsachse 8 oder parallel zu dieser verlaufen und dass damit der zweite Motor 9 und der dritte Motor 13 nicht entlang der zweiten geometrischen Antriebsachse 8 nach außen von dem Karussell 3 abstehen. Stattdessen liegen die Motoren 9, 13 seitlich an dem Karussell 3 an. Der Industrieroboter beansprucht damit in Richtung der zweiten geometrischen Antriebsachse 8 weniger Platz. Dies sorgt bei einer Rotation des Karussells 3 um die erste geometrische Antriebsachse 5 für weniger Störung der Umgebung des Industrieroboters 1. Darüber hinaus schließt die geometrische Motorwellenachse 18 des zweiten Motors 9 des zweiten Antriebs 7 mit der ersten geometrischen Antriebsachse 5 einen Winkel β von 30° ein. Der zweite Motor 9 ist damit mit seiner Motorwellenachse 18 weder vertikal noch horizontal ausgerichtet. Die unter einem Winkel gegen die erste geometrische Antriebsachse ausgerichtete Anordnung des zweiten Motors 9 sorgt zusätzlich dafür, dass der Motor weder die Kinematik noch die Umgebung des Industrieroboters behindert. Entsprechendes gilt die den dritten Motor 13 und die zugehörigen geometrische Motorwellenachse 20. Sie verläuft ebenfalls unter einem Winkel β von 30° gegen die erste geometrische Antriebsachse 5. Die geometrische Motorwellenachse 20 des dritten Motors 13 ist zu der geometrischen Motorwellenachse 18 des zweiten Motors 9 parallel.

Der Industrieroboter 1 weist eine Stützstruktur auf, welche zwei der Schwinge 6 zugeordnete Schwinge-Stützstangen 22, 23, zwei dem Armausleger 10 zugeordnete Armausleger-Stützstangen 24, 25, zwei die Schwinge-Stützstangen 22, 23 und die Armausleger-Stützstangen 24, 25 beweglich miteinander verbindende Drehmomentstützen 26, 27 und zwei die Armausleger-Stützstangen 24, 25 mit dem Endeffektorträger 30 verbindende Endeffektorstützen 28, 29 umfasst. Die Schwinge-Stützstangen 22, 23 sind mit einem ersten Ende drehbar an dem Karussell 3 und mit ihrem zweiten Ende drehbar an jeweils einer Drehmomentstütze 26, 27 aufgenommen. Die Drehmomentstützen 26, 27 sind relativ zu der Schwinge 6 um die dritte geometrische Antriebsachse 12 drehbar angeordnet. Die Endeffektorstützen 28, 29 sind um eine geometrische Endeffektorstützen-Achse 31 drehbar an dem Armausleger 10 aufgenommen. Die Endeffektorstützen-Achse 31 ist dabei parallel zu der dritten geometrischen Antriebsachse 12. Der Endeffektorträger 30 ist darüber hinaus an den zwei Endeffektorstützen 28, 29 beweglich aufgenommen. An ihm kann ein in der Zeichnung nicht dargestellter Endeffektor angeordnet werden. Die geometrischen Achsen, um die die Schwinge-Stützstangen 22, 23 und die Armausleger-Stützstangen 24, 25 drehbar an der Kinematik aufgenommen sind, sind dabei parallel zu der zweiten geometrischen Antriebsachse 8 und der dritten geometrischen Antriebsachse 12. Dabei spannen die geometrischen Verbindungen zwischen der dritten geometrischen Antriebsachse 12, der geometrischen Endeffektorstützen-Achse 31 und den geometrischen Achsen, um die die Armausleger-Stützstangen 24, 25 an den Drehmomentstützen 26, 27 und an den Endeffektorstützen 28, 29 drehbar aufgenommen sind, ein geometrisches Parallelogramm auf. Ferner spannen die geometrischen Verbindungen zwischen der zweiten geometrischen Antriebsachse 8, der dritten geometrischen Antriebsachse 12 und den geometrischen Achsen, um die die Schwinge-Stützstangen 22, 23 an dem Karussell 3 und an den Drehmomentstützen 26, 27 drehbar aufgenommen sind, ein geometrisches Parallelogramm auf.

Die Schwinge-Stützstangen 22, 23, die Armausleger-Stützstangen 24, 25, die Drehmomentstützen 26, 27 und die Endeffektorstützen 28, 29 bilden zwei kinematische Ketten:
eine erste Schwinge-Stützstange 22, eine erste Drehmomentstütze 26, eine erste Armausleger-Stützstange 24 und eine erste Endeffektorstütze 28 bilden eine erste kinematische Kette zwischen dem Karussell 3 und dem Endeffektorträger 30,
eine zweite Schwinge-Stützstange 23, eine zweite Drehmomentstütze 27, eine zweite Armausleger-Stützstange 25 und eine zweite Endeffektorstütze 29 bilden eine zweite kinematische Kette zwischen dem Karussell 3 und dem Endeffektorträger 30.

Die Schwinge-Stützstangen 22, 23 die Armausleger-Stützstangen 24, 25, die Drehmomentstützen 26, 27 und die Endeffektorstützen 28, 29 sind dabei derart an dem Industrieroboter angeordnet, dass sich die Schwinge 6 und der Armausleger 10 in dem Zwischenraum befinden, der durch die erste kinematische Kette und die zweite kinematische Kette begrenzt wird.

Die Stützstruktur stützt damit die Schwinge 6 und den Armausleger 10 seitlich ab, wodurch die Eigenstabilität und die Steifheit der Kinematik erhöht werden. Die Gefahr von Schwingungen und Vibrationen wird reduziert, was für eine hohe Präzision bei der Positionierung eines an dem Endeffektorträger angeordneten Endeffektors und einer zusätzlichen Traglast führt. Trotz einer kompakten Bauweise des Industrieroboters und einer hohen Traglast weist der Industrieroboter einen großen Arbeitsbereich auf.

Jede der Drehmomentstützen 26, 27 wirkt in Bezug auf die dritte geometrische Antriebsachse 12 wie ein zweiarmiger Hebel. An einem ersten Hebelarm 32 der ersten Drehmomentstütze 26 ist das zweite Ende der ersten Schwinge-Stützstange 22 drehbar aufgenommen. An einem zweiten Hebelarm 33 der ersten Drehmomentstütze 26 ist ein erstes Ende der ersten Armausleger-Stützstange 24 drehbar ausgenommen. Entsprechendes gilt für die zweite Drehmomentstütze 27: an einem ersten Hebelarm 32 der zweiten Drehmomentstütze 27 ist das zweite Ende der zweiten Schwinge-Stützstange 23 drehbar aufgenommen, während an einem zweiten Hebelarm 33 der zweiten Drehmomentstütze 27 ein erstes Ende der zweiten Armausleger-Stützstange 25 drehbar aufgenommen ist.

Jede der Endeffektorstützen 28, 29 wirkt als einarmiger Hebel in Bezug auf die geometrische Endeffektorstützen-Achse: an einem Hebelarm 34 der ersten Endeffektorstütze 28 ist die erste Armausleger-Stützstange 24 mit einem zweiten Ende aufgenommen. Entsprechend ist an einem Hebelarm 34 der zweiten Endeffektorstütze 29 die zweite Armausleger-Stützstange 25 mit einem zweiten Ende aufgenommen.

Die erste Schwinge-Stützstange 22 und die zweite Schwinge-Stützstange 23 sind parallel zueinander. Ebenso sind die erste Armausleger-Stützstange 24 und die zweite Armausleger-Stützstange 25 parallel zueinander. Sie sind ferner durch ein Querverbinder 35 abgestützt.

Die Stützstruktur ist damit in der Lage, der Bewegung der Schwinge 6 und des Armauslegers 10 zu folgen, wobei die Bewegung durch den zweiten Antrieb 7 und den dritten Antrieb 11 ausgelöst wird. Die Stützstruktur ist dabei passiv. Sie wird nicht durch einen zusätzlichen Antrieb unterstützt. Die Stützstruktur sorgt dafür, dass der Endeffektorträger 30 stets parallel zu einer durch die Roboterbasis aufgespannten Ebene ist. Bevorzugt verläuft diese Ebene horizontal.

Der Industrieroboter 1 ist mit physischen Gewichten 36 in Scheibenform ausgestattet, welche zu einem ersten Stapel 37 und einem zweiten Stapel 38 zusammengefasst sind. Dabei sind die Stapel 37, 38 symmetrisch zur Treibstange 16 an dem Hebel 17 aufgenommen. Die Befestigung der Gewichte 36 in Scheibenform an dem Hebel 17 erfolgt mittels einer Schraubverbindung. Die Gewichte 36 stehen damit in die dem Armausleger 10 abgewandte Richtung von dem Karussell 3 ab und behindern daher die Bewegung eines an dem Endeffektorträger 30 angeordneten Endeffektors nicht. Die Stapel 37 und 38 der Gewichte 36 bilden ein Gegengewicht zu dem Armausleger 10. Sie werden bei Bedarf manuell an der Kinematik angeordnet oder von dieser entfernt, je nachdem, welche Traglast mit dem Industrieroboter 1 bewegt werden soll.

Darüber hinaus ist der Industrieroboter mit einer Gewichtsausgleichseinrichtung ausgestattet, welche zwei Zylinder 39 umfasst. In jedem Zylinder 39 ist ein Kolben verschiebbar aufgenommen, welcher in der Zeichnung nicht erkennbar ist. Der Kolben ist mit einer Kolbenstange 41 ausgestattet. Jeder Zylinder 39 ist über ein erstes Lager 42 drehbar mit dem Karussell 3 verbunden. Dabei ist das erste Lager 42 abseits einer geometrischen Verbindung 44 zwischen der zweiten geometrischen Antriebsachse 8 und der dritten geometrischen Antriebsachse 12 angeordnet. Jede Kolbenstange 41 ist über ein zweites Lager 43 zumindest mittelbar drehbar mit der Schwinge 6 verbunden. Jeder Zylinder 39 ist mit mehreren Druckspeichern 40 gekoppelt. Jeder Druckspeicher weist eine nicht dargestellte Membran auf, die das Volumen des Druckspeichers in ein erstes Teilvolumen und ein zweites Teilvolumen unterteilt. Das erste Teilvolumen ist mit Hydraulikflüssigkeit gefüllt und über eine nicht dargestellte Leitung mit dem Zylinder 39 verbunden. Das zweite Teilvolumen ist mit einem Gas gefüllt. Durch Erhöhung des Gasdrucks in dem zweiten Teilvolumen vergrößert sich dieses und drückt dadurch Hydraulikflüssigkeit über die Leitung in den zugehörigen Zylinder 39. Eine in der Zeichnung nicht dargestellte Steuereinrichtung steuert die Gewichtsausgleichseinrichtung in Abhängigkeit von der Gewichtskraft einer an dem Endeffektor angeordneten Traglast. Diese Traglast ist in der Zeichnung nicht dargestellt. Zur Steuerung der durch die Gewichtsausgleicheinrichtung ausgeübten Gegenkraft stellt die Steuereinrichtung ein, welche und wie viele der Druckspeicher 40 mit den Zylindern 39 derart aktiv wirkverbunden sind, dass Hydraulikflüssigkeit von dem Druckspeicher und den Druckspeichern in den Zylinder geleitet wird. Darüber hinaus stellt die Steuereinrichtung über ein nicht dargestelltes Proportionalventil ein, welches Volumen einer Hydraulikflüssigkeit zur Bewegung des Kolbens im jeweiligen Zylinder 39 zur Verfügung steht.

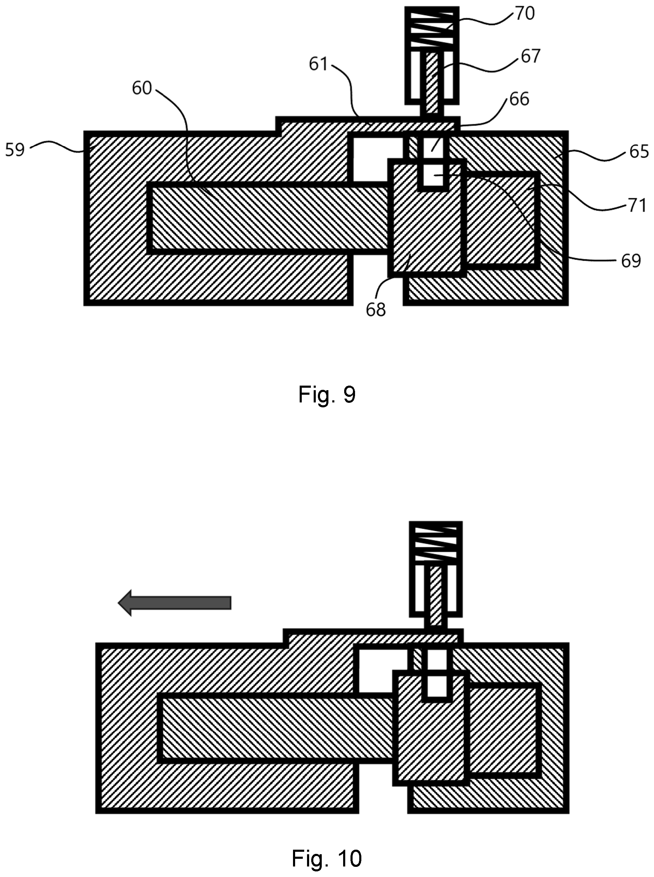

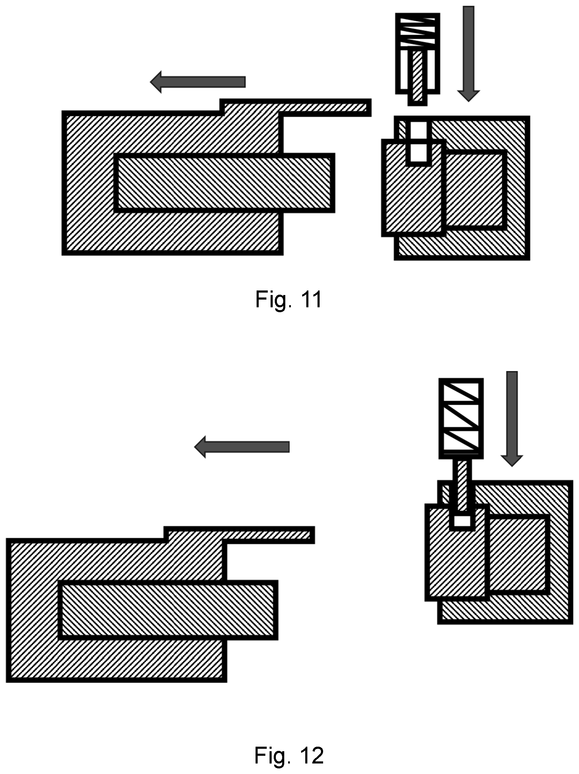

In den Figuren 9 bis 12 ist ein zweites Ausführungsbeispiel einer Schwingen-Halteeinrichtung dargestellt. Diese Schwingen-Halteeinrichtung ist eine alternative Ausführungsform der in den Figuren 4 bis 8 dargestellten Schwingen-Halteeinrichtung. Sie sorgt dafür, dass die Schwinge in einer Schwingen-Halterstellung gehalten und arretiert wird, wenn der Industrieroboter gewartet, repariert oder transportiert werden soll. Die Schwingen-Halteeinrichtung gemäß Figuren 9 bis 12 umfasst ein Getriebe-Gehäuseteil 65, an welchem eine Schwingen-Antriebswelle 71 des zweiten Getriebes drehbar aufgenommen ist, eine zweite Aufnahme 66 an dem Getriebe-Gehäuseteil 65, ein Schwingen-Blockiermittel 67 in Form eines Bolzens, ein Schwingen-Blockierelement 68, welches als Nabe ausgebildet und mit einer Ausnehmung 69 ausgestattet ist, eine Feder 70 sowie ein Halteteil 61, welches an einem zweiten Motor 59 befestigt ist. Das Getriebe-Gehäuseteil 65 ist an dem Karussell befestigt, welches in den Figuren 9 bis 12 nicht dargestellt ist. Das Schwingen-Blockiermittel 67 in Form eines Bolzens und die Feder 70 sind entweder an dem GetriebeGehäuseteil 65 oder an dem Karussell aufgenommen. Die Schwingen-Antriebswelle 71 ist Teil des Schwingenantriebsstrangs, welcher das Drehmoment des zweiten Motors 59 auf die in Figur 9 bis 12 nicht dargestellte Schwinge überträgt. Das als Nabe ausgebildete Schwingen-Blockierelement 68 ist drehfest und nicht lösbar mit der Schwingen-Antriebswelle 71 verbunden. In Figur 9 ist der zweite Motor 59 an dem Getriebegehäuseteil 65 angeordnet. Eine Motorwelle 60 des zweiten Motors 59 ist drehfest mit dem als Nabe ausgebildeten Schwingen-Blockierelement 68 verbunden und überträgt ihr Drehmoment auf diese. Der als Schwingen-Blockiermittel 67 dienende Bolzen ist zurückgezogen und befindet sich außerhalb der zweiten Aufnahme 66 des Getriebe-Gehäuseteils 65 sowie außerhalb der Ausnehmung 69 des als Nabe ausgebildeten Schwingen-Blockierelements 68. In dieser Stellung wird das Schwingen-Blockiermittel 67 durch das Halteteil 61 gehalten. Das Halteteil 61 drückt dabei das Schwingen-Blockiermittel 67 gegen die Feder 70, die dadurch gestaucht wird. Dadurch ist das Schwingen-Blockiermittel 67 unter Vorspannung aufgenommen. Die Figuren 10 und 11 zeigen, dass der zweite Motor 59 mit der Motorwelle 60 und dem Halteteil 61 von dem Getriebe-Gehäuseteil 65 entfernt wird. Dabei gibt das Halteteil 61 das Schwingen-Blockiermittel 67 frei. Die gestauchte Feder 70 entspannt sich und drückt dadurch das Schwingen-Blockiermittel 67 in die zweite Aufnahme 66 des Getriebe-Gehäuseteils 65 und in die Ausnehmung 69 des Schwingen-Blockierelements 68. Die mit dem Schwingen-Blockierelement 68 drehfest verbundene Schwingen-Antriebswelle 71 wird dadurch in ihrer Position gehalten und kann sich daher nicht drehen. Entsprechend verbleibt die in den Figuren 9 bis 12 nicht dargestellte Schwinge, welche an die Schwingen-Antriebswelle 71 gekoppelt ist, in ihrer Schwingen-Haltestellung. Die Schwingen-Halteeinrichtung befindet sich nun in ihrem Arretierungszustand. Dies ist Figur 12 dargestellt. Die Armausleger-Haltereinrichtung kann entsprechend ausgebildet sein.

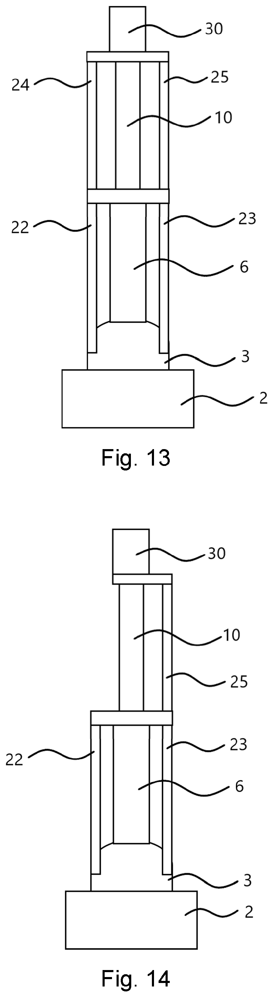

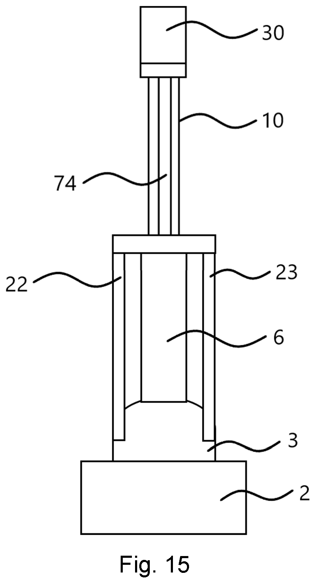

In den Figuren 13, 14 und 15 sind verschiedene Ausführungsbeispiele einer Stützstruktur der Kinematik schematisch dargestellt. Der Industrieroboter umfasst eine Roboterbasis 2, ein Karussell 3, eine Schwinge 6, einen Armausleger 10 und einen Endeffektorträger 30. Figur 13 zeigt vereinfacht das Ausführungsbeispiel gemäß den Figuren 1 bis 3: Die Stützstruktur weist zwei Schwinge-Stützstangen 22, 23 und zwei Armausleger-Stützstangen 24, 25 derart auf, dass sich die Schwinge 6 und der Armausleger 10 in einem Zwischenraum befinden, der durch die Schwinge-Stützstangen 22, 23 und durch die Armausleger-Stützstangen 24, 25 aufgespannt wird. Das in Figur 14 dargestellte zweite Ausführungsbeispiel unterscheidet sich von dem ersten Ausführungsbeispiel dadurch, dass der Armausleger 10 nur mit einer Armausleger-Stützstange 25 ausgestattet ist. Diese ist seitlich neben dem Armausleger angeordnet. Der Armausleger wird damit nur auf einer Seite von der Armausleger-Stützstange 25 unterstützt. Bei dem dritten Ausführungsbeispiel gemäß Figur 15 ist nur ebenfalls nur eine einzige Armausleger-Stützstange 74 vorgesehen. Im Unterschied zu dem in Figur 14 dargestellten Ausführungsbeispiel ist die Armausleger-Stützstange 74 jedoch nicht seitlich neben dem Armausleger 10 angeordnet, sondern zentral oberhalb des Armauslegers 10.

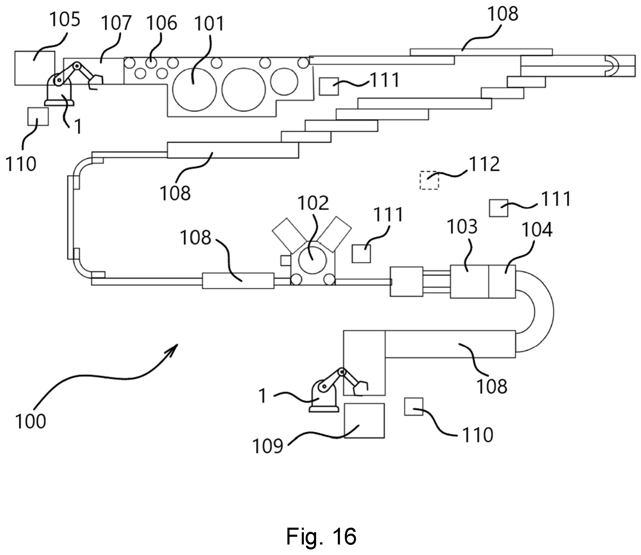

Figur 16 zeigt ein Ausführungsbeispiel eines Systems 100, welches mit zwei Industrierobotern 1 gemäß den Figuren 1 bis 3 ausgestattet ist. Diese dienen als Entpalettierroboter und als Palettierroboter. Sie sind mit nicht näher dargestellten Greifern ausgestattet, welche Behälter oder Gebinde aufnehmen und halten. Hierzu zählen Klemmgreifer zum seitlichen Einklemmen von Behältern oder Gebinden, Hakengreifer zum Aufnehmen von Getränkekisten, Beladeplatten, auf die Behälter oder Gebinde geschoben werden können, und Vakuumsaugplatten zum Ansaugen von Dosen. Das System 100 ist als Behälter-Abfüllanlage ausgebildet. Hierzu umfasst das System 100 neben den Industrierobotern 1 mehrere Behälterbehandlungsmaschinen: eine Abfüllmaschine 101, eine Etikettiermaschine 102, einen Packer 103 und einen Schrumpftunnel 104. An einem Anlieferplatz 105 werden Paletten mit leeren Behältern 106 in Form von Flaschen oder Dosen abgesetzt. Der erste Industrieroboter 1 dient zum Entpalettieren. Die Behälter 106 werden anschließend vereinzelt und mit einem Transportband 107 der Abfüllmaschine 101 zuführt. Die befüllten und verschlossenen Behälter werden dann über weitere Transportbänder 108 zu der Etikettiermaschine 102, dem Packer 103 und dem Schrumpftunnel 104 transportiert. Die zu Gebinden zusammengestellten Behälter werden schließlich von dem zweiten Industrieroboter 1 an einem Stapelplatz 109 palettiert. Die Industrieroboter 1 sind mit Steuerungen 110 ausgestattet, die mit weiteren Steuerungen 111 der Behandlungsmaschinen und gegebenenfalls mit einer übergeordneten Anlagen-Steuerung 112 für das gesamte System gekoppelt sind.

Sämtliche Merkmale der Erfindung können sowohl einzeln als auch in beliebiger Kombination miteinander erfindungswesentlich sein.

### Bezugszahlen

- 1: Industrieroboter
- 2: Roboterbasis
- 3: Karussell
- 4: Erster Antrieb
- 5: Erste geometrische Antriebsachse
- 6: Schwinge
- 7: Zweiter Antrieb
- 8: Zweite geometrische Antriebsachse
- 9: Zweiter Motor
- 10: Armausleger
- 11: Dritter Antrieb
- 12: Dritte geometrische Antriebsachse
- 13: Dritter Motor
- 14: Zweites Getriebe
- 15: Drittes Getriebe
- 16: Treibstange
- 17: Hebel
- 18: Geometrische Motorwellenachse des zweiten Motors
- 19: Schwingen-Antriebswelle
- 20: Geometrische Motorwellenachse des dritten Motors
- 21: Abgangswelle des dritten Getriebes
- 22: Schwinge-Stützstange
- 23: Schwinge-Stützstange
- 24: Armausleger-Stützstange
- 25: Armausleger-Stützstange
- 26: Drehmomentstütze
- 27: Drehmomentstütze
- 28: Endeffektorstütze
- 29: Endeffektorstütze
- 30: Endeffektorträger
- 31: Geometrische Endeffektorstützen-Achse
- 32: Erster Hebelarm der Drehmomentstütze
- 33: Zweiter Hebelarm der Drehmomentstütze
- 34: Hebelarm der Endeffektorstütze
- 35: Querverbinder
- 36: Gewicht in Scheibenform
- 37: Erster Stapel
- 38: Zweiter Stapel
- 39: Zylinder
- 40: Druckspeicher
- 41: Kolbenstange
- 42: Erstes Lager
- 43: Zweites Lager
- 44: Geometrische Verbindung
- 45: Getriebe-Gehäuseteil
- 46: Zweite Aufnahme
- 47: Schwingen-Blockiermittel
- 48: Schwingen-Blockierelement
- 49: Ausnehmung
- 50: Schraubenkopf
- 51: Kinematischer Ursprung
- 52: Tool Center Point
- 59: zweiter Motor
- 60: Motorwelle
- 61: Halteteil
- 65: Getriebe-Gehäuseteil
- 66: zweite Aufnahme
- 67: Schwingen-Blockiermittel
- 68: Schwingen-Blockierelement
- 69: Ausnehmung
- 70: Feder
- 71: Schwingen-Antriebswelle
- 74: Armausleger-Stützstange
- 100: System
- 101: Abfüllmaschine
- 102: Etikettiermaschine
- 103: Packer
- 104: Schrumpftunnel
- 105: Anlieferplatz
- 106: Behälter
- 107: Transportband
- 108: Transportband
- 109: Stapelplatz
- 110: Steuerung des Industrieroboters
- 111: Steuerung der Behandlungsmaschine
- 112: übergeordnete Anlagen-Steuerung

## Patentansprüche

1. Industrieroboter (1) zur Handhabung von Stückgütern
mit einer seriellen Kinematik, welche für eine große Traglast der Stückgüter ausgebildet ist, mit einem an einer Roboterbasis (2) drehbar aufgenommenen Karussell (3),
mit einem ersten Antrieb (4), der das Karussell (3) um eine erste geometrische Antriebsachse (5) relativ zu der Roboterbasis (2) dreht, wobei der erste Antrieb (4) einen ersten Motor umfasst,
mit einer an dem Karussell (3) drehbar aufgenommenen Schwinge (6),
mit einem zweiten Antrieb (7), der die Schwinge (6) um eine zweite geometrische Antriebsachse (8) relativ zu dem Karussell (3) dreht, wobei der zweite Antrieb (7) einen zweiten Motor (9, 59) umfasst,
mit einem an der Schwinge (6) drehbar aufgenommenen Armausleger (10),
mit einem dritten Antrieb (11), der den Armausleger (10) um eine dritte geometrische Achse (12) relativ zu der Schwinge (6) dreht, wobei der dritte Antrieb (11) einen dritten Motor (13) umfasst,
mit einem an dem Armausleger (10) beweglich angeordneten Endeffektorträger (30), welcher einen die Stückgüter handhabenden Endeffektor aufnimmt,
mit einer Schwingen-Halteeinrichtung, welche in ihrem Arretierungszustand die Schwinge (6) in einer Schwingen-Haltestellung relativ zu dem Karussell (3) arretiert, wobei die Schwingen-Halteeinrichtung derart ausgebildet und an der Kinematik angeordnet ist, dass die Schwinge (6) bei einem Lösen des zweiten Motors (9, 59) von der Kinematik in der Schwingen-Haltestellung verbleibt, und/oder
mit einer Armausleger-Halteeinrichtung, welche in ihrem Arretierungszustand den Armausleger (10) in einer Armausleger-Haltestellung relativ zu der Schwinge (6) arretiert, wobei die Armausleger-Halteeinrichtung derart an der Kinematik angeordnet ist, dass der Armausleger (10) bei einem Lösen des dritten Motors (13) von der Kinematik in der Armausleger-Haltestellung verbleibt.

2. Industrieroboter nach Anspruch 1, **dadurch gekennzeichnet, dass** der zweite Antrieb (7) ein zweites Getriebe (14) umfasst, von dem der zweite Motor (9) lösbar ist, während das zweite Getriebe (14) an der Kinematik verbleibt, und dass die Schwingen-Halteeinrichtung in das zweite Getriebe (14) integriert oder an dem zweiten Getriebe (14) angeordnet ist; oder **dadurch gekennzeichnet, dass** die Schwingen-Halteeinrichtung zwischen dem zweiten Antrieb (7) und der Schwinge (6) an der Kinematik angeordnet ist.

3. Industrieroboter nach einem der vorhergehenden Ansprüche, **dadurch gekennzeichnet, dass** der dritte Antrieb (11) ein drittes Getriebe (15) umfasst, von dem der dritte Motor (13) lösbar ist, während das dritte Getriebe (15) an der Kinematik verbleibt, und dass die Armausleger-Halteeinrichtung in das dritte Getriebe (15) integriert oder an dem dritten Getriebe (15) angeordnet ist; oder
**dadurch gekennzeichnet, dass** die Armausleger-Halteeinrichtung zwischen dem dritten Antrieb (11) und dem Armausleger (10) an der Kinematik angeordnet ist.

4. Industrieroboter nach einem der vorhergehenden Ansprüche, **dadurch gekennzeichnet, dass** die Schwingen-Halteeinrichtung ein Schwingen-Blockierelement (48, 68) umfasst, welches mit einer Schwingen-Antriebswelle (19, 71) drehfest verbunden ist, wobei die Schwingen-Antriebswelle (19, 71) Teil eines Schwingenantriebsstrangs ist, welcher das Drehmoment des zweiten Antriebs (7) auf die Schwinge (6) überträgt, dass das Schwingen-Blockierelement (48, 68) mindestens eine Ausnehmung (49, 69) aufweist, dass die Kinematik mit mindestens einer zweiten Aufnahme (46, 66) ausgestattet ist, die an dem Karussell (3) starr festgelegt ist, und dass mindestens ein Schwingen-Blockiermittel (47, 67), welches in die Ausnehmung (49, 69) des Schwingen-Blockierelements (48, 68) eingeführt ist, in die zweite Aufnahme (46, 66) eingreift und dabei derart festgelegt ist, dass es das Schwingen-Blockierelement (48, 68) mit der Schwingen-Antriebswelle (19) relativ zu dem Karussell (3) fixiert; und/oder
**dadurch gekennzeichnet, dass** die Armausleger-Halteeinrichtung ein Armausleger-Blockierelement umfasst, welches mit einer Armausleger-Antriebswelle drehfest verbunden ist, wobei die Armausleger-Antriebswelle Teil eines Armauslegerantriebsstrangs ist, welcher das Drehmoment des dritten Antriebs auf den Armausleger überträgt, dass das Armausleger-Blockierelement mindestens eine Ausnehmung aufweist, dass die Kinematik mit mindestens einer dritten Aufnahme ausgestattet ist, die an dem Karussell oder an der Schwinge starr festgelegt ist, und dass mindestens ein Armausleger-Blockiermittel, welche in die Ausnehmung des Armausleger-Blockierelements eingeführt ist, in die dritte Aufnahme eingreift und dabei derart festgelegt ist, dass es das Armausleger-Blockierelement mit der Armausleger-Antriebswelle relativ zu dem Karussell fixiert.

5. Industrieroboter nach Anspruch 4, **dadurch gekennzeichnet, dass** die Ausnehmung (49, 69) als Durchgangsöffnung oder als Sackloch ausgebildet ist.

6. Industrieroboter nach einem der Ansprüche 4 bis 5, **dadurch gekennzeichnet, dass** das Schwingen-Blockiermittel (47, 67) und/ oder Armausleger-Blockiermittel als Schraube oder Stift oder Bolzen ausgebildet sind, wobei optional die/ der in das Schwingen-Blockierelement (47, 67) und in die zweite Aufnahme (46, 66) eingesetzte Schraube oder Stift oder Bolzen mit ihrer/ seiner geometrischen Längsachse parallel oder senkrecht zu einer geometrischen Rotationsachse des Schwingen-Blockierelements (48, 68) ausgerichtet ist.

7. Industrieroboter nach Anspruch 6, **dadurch gekennzeichnet, dass** die/ der in das Armausleger-Blockierelement und in die dritte Aufnahme eingesetzte Schraube oder Stift oder Bolzen mit ihrer/ seiner geometrischen Längsachse parallel oder senkrecht zu einer geometrischen Rotationsachse des Armausleger-Blockierelements ausgerichtet ist.

8. Industrieroboter nach einem der Ansprüche 4 bis 7, **dadurch gekennzeichnet, dass** das Schwingen-Blockierelement (48) und/ oder das Armausleger-Blockierelement als Scheibe ausgebildet ist; oder
**dadurch gekennzeichnet, dass** das Schwingen-Blockierelement und/ oder das Armausleger-Blockierelement als Zylinder ausgebildet ist; oder
**dadurch gekennzeichnet, dass** das Schwingen-Blockierelement (68) und/ oder das Armausleger-Blockierelement als Nabe ausgebildet ist.

9. Industrieroboter nach einem der Ansprüche 4 bis 8, **dadurch gekennzeichnet, dass** das Schwingen-Blockiermittel (67) unter Vorspannung derart an der Kinematik aufgenommen ist, dass es von einem an dem zweiten Motor (59) angeordneten Halteteil (61) in einer vorgespannten Betriebsstellung gehalten ist, in der es sich außerhalb der Ausnehmung (69) des Schwingen-Blockierelements (68) befindet, solange der zweite Motor (59) an der Kinematik befestigt ist, und das Schwingen-Blockiermittel (67) darüber hinaus derart unter Vorspannung an der Kinematik aufgenommen ist, dass es beim Lösen des zweiten Motors (59) von der Kinematik durch das Halteteil (61) freigegeben ist und sich im Arretierungszustand in einer Blockierstellung in dem Schwingen-Blockierelement (68) befindet; und/oder
**dadurch gekennzeichnet, dass** das Armausleger-Blockiermittel unter Vorspannung derart an der Kinematik aufgenommen ist, dass es von einem an dem dritten Motor angeordneten Halteteil in einer vorgespannten Betriebsstellung gehalten ist, in der es sich außerhalb der Ausnehmung des Armausleger-Blockierelements befindet, solange der dritte Motor an der Kinematik befestigt ist, und dass das Armausleger-Blockiermittel darüber hinaus derart unter Vorspannung an der Kinematik aufgenommen ist, dass es beim Lösen des dritten Motors von der Kinematik durch das Halteteil freigegeben ist und sich im Arreiterungszustand in einer Blockierstellung in dem Armausleger-Blockierelement befindet.

10. Industrieroboter nach einem der Ansprüche 1 bis 3, **dadurch gekennzeichnet, dass** die Schwingen-Halteeinrichtung als elektromagnetische Federdruck-Feststellbremse ausgebildet ist; und/oder
**dadurch gekennzeichnet, dass** die Armausleger-Halteeinrichtung als elektromagnetische Federdruck-Feststellbremse ausgebildet ist.

11. Industrieroboter nach einem der vorhergehenden Ansprüche, **dadurch gekennzeichnet, dass** die Schwingen-Halteeinrichtung derart an der Kinematik befestigt ist, dass sie ausschließlich mit Spezialwerkzeugen von der Kinematik lösbar ist; und/oder
**dadurch gekennzeichnet, dass** die Armausleger-Halteeinrichtung derart an der Kinematik befestigt ist, dass sie ausschließlich mit Spezialwerkzeugen von der Kinematik lösbar ist.

12. Industrieroboter nach einem der vorhergehenden Ansprüche, **dadurch gekennzeichnet, dass** er mit einer Karussell-Halteeinrichtung ausgestattet ist, welche in ihrem Arretierungszustand das Karussell in einer Karussell-Haltestellung relativ zu der Roboterbasis arretiert, wobei die Karussell-Halteeinrichtung derart ausgebildet und an der Kinematik angeordnet ist, dass das Karussell bei einem Lösen des ersten Motors von der Kinematik in der Karussell-Haltestellung verbleibt.

13. System (100) zur Handhabung von Stückgütern, **dadurch gekennzeichnet, dass** es mindestens einen Industrieroboter (1) nach einem der vorhergehenden Ansprüche umfasst.

14. Verfahren zur Handhabung von Stückgütern mit mindestens einem Industrieroboter (1) zur Handhabung von Stückgütern
mit einer seriellen Kinematik, welche für eine große Traglast der Stückgüter ausgebildet ist, mit einem an einer Roboterbasis (2) drehbar aufgenommenen Karussell (3),
mit einem ersten Antrieb (4), der das Karussell (3) um eine erste geometrische Antriebsachse (5) relativ zu der Roboterbasis (2) dreht,
mit einer an dem Karussell (3) drehbar aufgenommenen Schwinge (6),
mit einem zweiten Antrieb (7), der die Schwinge (6) um eine zweite geometrische Antriebsachse (8) relativ zu dem Karussell (3) dreht, wobei der zweite Antrieb (7) einen zweiten Motor (9) umfasst,
mit einem an der Schwinge (6) drehbar aufgenommenen Armausleger (10),
mit einem dritten Antrieb (11), der den Armausleger (10) um eine dritte geometrische Achse (12) relativ zu der Schwinge (6) dreht, wobei der dritte Antrieb (11) einen dritten Motor (13) umfasst,
mit an dem Armausleger (10) beweglich angeordneten Endeffektorträger (30), welcher einen die Stückgüter handhabenden Endeffektor aufnimmt,
mit einer Schwingen-Halteeinrichtung (45, 46, 47, 48, 49, 61, 65, 66, 67, 68, 69, 70), welche in ihrem Arretierungszustand die Schwinge (6) in einer vorgegebenen Schwingen-Haltestellung relativ zu dem Karussell (3) arretiert, wobei die Schwingen-Halteeinrichtung (45, 46, 47, 48, 49, 61, 65, 66, 67, 68, 69, 70) derart ausgebildet und an der Kinematik angeordnet ist, dass die Schwinge (6) bei einem Lösen des zweiten Motors (9, 59) von der Kinematik in der Schwingen-Haltestellung verbleibt,
mit einer Armausleger-Halteeinrichtung, welche in ihrem Arretierungszustand den Armausleger in einer vorgegebenen Armausleger-Haltestellung relativ zu der Schwinge arretiert, wobei die Armausleger-Halteeinrichtung derart an der Kinematik angeordnet ist, dass der Armausleger bei einem Lösen des dritten Motors von der Kinematik in der Armausleger-Haltestellung verbleibt, **dadurch gekennzeichnet, dass** vor einer Wartung, in einem Schadensfall oder vor einem Transport des Industrieroboters (1) die Schwinge (6) mit der Schwingen-Halteeinrichtung (45, 46, 47, 48, 49, 61, 65, 66, 67, 68, 69, 70) in einer vorgegebenen Schwingen-Haltestellung relativ zu dem Karussell (3) arretiert wird, und dass vor einer Wartung, in einem Schadensfall oder vor einem Transport des Industrieroboters (1) der Armausleger (10) mit der Armausleger-Halteeinrichtung in einer vorgegebenen Armausleger-Haltestellung relativ zu der Schwinge (6) arretiert wird.

15. Verfahren nach dem vorherigen Verfahrensanspruch, **dadurch gekennzeichnet, dass** die Schwingen-Halteeinrichtung (45, 46, 47, 48, 49, 61, 65, 66, 67, 68, 69, 70) in ihrem Arretierungszustand die Schwinge (6) in verschiedenen Schwingen-Haltestellungen relativ zu dem Karussell (3) arretiert; und/oder
**dadurch gekennzeichnet, dass** die Armausleger-Halteeinrichtung in ihrem Arretierungszustand den Armausleger (10) in verschiedenen Armsausleger-Halterstellungen relativ zu der Schwinge (6) arretiert; und/oder
**dadurch gekennzeichnet, dass** die Schwinge-Halteeinrichtung und die Armausleger-Halteeinrichtung gleichzeitig aktiviert werden und dabei beide in ihren Arretierungszustand übergehen.
